# EUROPÄISCHE PATENTANMELDUNG

(11) **EP 1 314 598 A2**
(43) Veröffentlichungstag der Anmeldung: **28.05.2003**
(21) Anmeldenummer: 02026034.5
(22) Anmeldetag: 21.11.2002
(51) Int. Cl.: B60J 5/04

(54) **Türmodul**

(30) Priorität: 26.11.2001 DE 10157894
(71) Anmelder: Delphi Technologies, Inc., Troy, MI 48007 (US)
(72) Erfinder: Cucchiara, Salvatore, 51399 Burscheid (DE); Dreis, Thomas, 42781 Haan (DE); Meyenbrock, Ludger, 42105 Wuppertal (DE); Freitag, Klaus, 42285 Wuppertal (DE)
(74) Vertreter: Manitz, Finsterwald & Partner GbR

(57) **Zusammenfassung**

Die Erfindung betrifft ein Türmodul mit einer auf eine Öffnung, insbesondere eines Türblechs einer Kraftfahrzeugtür, aufsetzbaren Platte (10), an der eine Fensterhebereinrichtung (18) gehalten ist.

## Beschreibung

Die Erfindung betrifft ein Türmodul mit einer auf eine Öffnung, insbesondere eines Türblechs einer Kraftfahrzeugtür, aufsetzbaren Platte, welche die Öffnung im aufgesetzten Zustand zumindest überwiegend überdeckt und auf welcher eine Fensterhebereinrichtung gehalten ist.

Derartige Türmodule sind grundsätzlich bekannt. Typischerweise werden die Türmodule an einem Vormontageort vormontiert, anschließend an einen Endmontageort transportiert und dort zu einem späteren Zeitpunkt an einer Kraftfahrzeugtür angebracht.

Der Erfindung liegt die Aufgabe zugrunde, ein Türmodul zu schaffen, bei dem sowohl der Transport als auch die Endmontage vereinfacht ist.

Zur Lösung der Aufgabe ist ein Türmodul mit den Merkmalen des Anspruchs 1 vorgesehen.

Ein erfindungsgemäßes Türmodul weist eine auf eine Öffnung, insbesondere eines Türblechs einer Kraftfahrzeugtür, aufsetzbare Platte auf, welche die Öffnung im aufgesetzten Zustand zumindest überwiegend überdeckt, wobei auf einer Seite der Platte eine zwischen einer Vormontagelage und einer Endlage verstellbare Fensterhebereinrichtung gehalten ist, und wobei in der Platte zumindest eine Zugriffsöffnung derart vorgesehen ist, dass die Fensterhebereinrichtung bei aufgesetzter Platte von der anderen Seite der Platte durch die Platte hindurch verstellbar ist.

Erfindungsgemäß ist die Fensterhebereinrichtung zwischen einer Vormontage und einer Endlage verstellbar. Dabei kann die Vormontagelage der Fensterhebereinrichtung so gewählt werden, wie es für den Transport des Türmoduls besonders günstig ist, d.h. beispielsweise so, dass die Fensterhebereinrichtung an keiner Stelle über den Rand der Platte hervorsteht. Das erfindungsgemäße Türmodul lässt sich daher besonders kompakt verpacken und Platz sparend transportieren.

Erst bei der Endmontage des erfindungsgemäßen Türmoduls wird die Fensterhebereinrichtung in ihre Endlage gebracht. Dabei kann das Türmodul derart auf die Öffnung eines Türblechs einer Kraftfahrzeugtür aufgesetzt werden, dass die Fensterhebereinrichtung in das Innere eines Türinnenraums weist. Da die Platte die Öffnung im aufgesetzten Zustand zumindest überwiegend überdeckt, ist erfindungsgemäß zumindest eine Zugriffsöffnung in der Platte vorgesehen, durch die hindurch die Fensterhebereinrichtung von der anderen Seite, d.h. von außen, verstellbar ist.

Mittels dieser Zugriffsöffnung lässt sich die Fensterhebereinrichtung beispielsweise im Bereich eines Drehpunktes angreifen und aus ihrer Vormontagelage in ihre Endlage zu schwenken. Die Zugriffsöffnung erweist sich insbesondere dann als vorteilhaft, wenn die Platte die Öffnung des Türblechs vollständig überdeckt und ein Zugriff auf die Fensterhebereinrichtung durch die Öffnung des Türblechs hindurch gar nicht oder nur mit Hilfe von Spezialwerkzeug möglich ist.

Sind darüber hinaus zusätzliche Zugriffsöffnungen in der Platte des Türmoduls vorgesehen, so lässt sich auch eine zu bewegende Fensterscheibe von außen mit einem verfahrbaren Schlitten der Fensterhebereinrichtung verbinden.

Ist auf der in den Türinnenraum weisenden Seite der Platte des Türmoduls außerdem eine Türverriegelungsvorrichtung angebracht, so lässt sich diese ebenfalls durch eine oder mehrere entsprechend angeordnete Zugriffsöffnungen bei aufgesetzter Platte von außen betätigen.

Dabei können die erfindungsgemäßen Zugriffsöffnungen so klein ausgebildet werden, dass sich ein entsprechend vorgesehenes Werkzeug, beispielsweise ein Schraubendreher, leicht hindurchführen lässt, sich die Zugriffsöffnungen aber gleichzeitig mit einfachen Mitteln verschließen lassen, beispielsweise mit kleinen Abdichtgummis oder mit selbstklebenden Folienabschnitten. Sitzt die Platte des Türmoduls außerdem abdichtend auf einem die Öffnung umgebenden Randbereich des Türblechs auf, so lässt sich der Fahrgastraum des Kraftfahrzeugs durch das erfindungsgemäße Türmodul besonders wirksam gegen äußere Einflüsse, insbesondere von außen eindringende Feuchtigkeit oder Geräusche schützen.

Vorteilhafte Ausführungsformen der Erfindung sind den Unteransprüchen, der Beschreibung und der Zeichnung zu entnehmen.

Gemäß einer vorteilhaften Ausführungsform des erfindungsgemäßen Türmoduls ist die Fensterhebereinrichtung um einen Drehpunkt verdrehbar und die Zugriffsöffnung im Bereich des Drehpunktes angeordnet. Eine Verdrehung der Fensterhebereinrichtung bedeutet eine besonders einfache Möglichkeit zur Verstellung der Fensterhebereinrichtung zwischen ihrer Vormontagelage und ihrer Endlage. Dabei lässt sich die Verstellung mittels einer einzigen Zugriffsöffnung erreichen, wenn die Zugriffsöffnung im Bereich des Drehpunktes angeordnet ist.

Bevorzugt ist die Position einer Schiene der Fensterhebereinrichtung in der Vormontagelage schräg zu ihrer Position in der Endlage orientiert. Um die Verpackung und den Transport des Türmoduls zu erleichtern, kann die schräge Vormontagelage dabei so gewählt werden, dass die Fensterhebereinrichtung an keiner Stelle über den Rand der Platte hervorragt. Dies kann insbesondere dann der Fall sein, wenn eine Schiene der Fensterhebereinrichtung in der Vormontagelage parallel zu einer Diagonalen der Platte orientiert ist.

Vorteilhafterweise ragen Endabschnitte der Schiene in der Endlage über die Platte hinaus. Auf diese Weise können die Endabschnitte in der Endlage einen die Öffnung umgebenden Randbereich des Türblechs hintergreifen und das Türmodul selbstklemmend am Türblech halten.

Bevorzugt ist zumindest eine weitere Zugriffsöffnung zum Verbinden der Fensterhebereinrichtung mit einer Fensterscheibe vorgesehen. Dadurch lässt sich ein auf einer Schiene der Fensterhebereinrichtung verfahrbarer Schlitten bei aufgesetzter Platte von außen her mit der Fensterscheibe verbinden, beispielsweise verschrauben.

Gemäß einer weiteren Ausführungsform der Erfindung ist auf der einen Seite der Platte eine Türverriegelungseinrichtung und zumindest eine im Bereich der Türverriegelungseinrichtung angeordnete Zugriffsöffnung zum Betätigen der Türverriegelungseinrichtung bei aufgesetzter Platte vorgesehen.

Vorteilhafterweise weist/weisen die oder jede Zugriffsöffnung jeweils eine Fläche im Bereich von wenigen Quadratzentimetern auf. Dadurch, dass die Zugriffsöffnungen erfindungsgemäß besonders klein ausgebildet sind, lassen sie sich mit einfachen Mitteln, beispielsweise mit Abdichtgummis oder selbstklebenden Folienabschnitten, gut verschließen.

Darüber hinaus ist es besonders günstig, wenn die Platte eine Abdichtplatte ist, welche die Öffnung abdichtend überdeckt. Der Fahrgastraum lässt sich dann besonders gut gegen äußere Einflüsse, insbesondere gegen eindringende Feuchtigkeit oder Geräusche schützen.

Weiterer Gegenstand der Erfindung ist ein Verfahren zum Montieren einer Fensterhebereinrichtung in einem durch ein Türblech begrenzten Türinnenraum einer Kraftfahrzeugtür, bei dem die Fensterhebereinrichtung in einer Vormontagelage auf einer Platte angebracht wird, die Platte auf eine im Türblech vorgesehene Öffnung derart aufgesetzt wird, dass die Fensterhebereinrichtung in den Türinnenraum weist, und die Fensterhebereinrichtung von außen durch zumindest eine in der Platte vorgesehene Zugriffsöffnung hindurch in eine Endlage gebracht wird und die Fensterhebereinrichtung von außen durch die und/oder zumindest eine weitere Zugriffsöffnung hindurch mit zumindest einer Fensterscheibe verbunden wird. Durch das erfindungsgemäße Verfahren lassen sich die bereits erläuterten Vorteile bei dem Transport und der Montage eines erfindungsgemäßen Türmoduls erzielen.

Bevorzugt wird die aufgesetzte Platte in der Endlage der Fensterhebereinrichtung durch eine einen die Öffnung begrenzenden Randbereich des Türblechs hintergreifende Schiene der Fensterhebereinrichtung am Türblech fixiert und insbesondere an das Türblech geklemmt. Diese Selbstklemmung der Platte am Türblech erleichtert ein Befestigen der Platte an der Kraftfahrzeugtür.

Vorteilhafterweise wird die Öffnung durch die aufgesetzte Platte abdichtend verschlossen und die oder jede Zugriffsöffnung der Platte mit einem Dichtmaterial verschlossen. Auf diese Weise lässt sich der Fahrgastraum besonders gut gegen äußere Einflüsse, insbesondere gegen eindringende Feuchtigkeit und Geräusche schützen.

Nachfolgend wird die Erfindung rein beispielhaft anhand einer vorteilhaften Ausführungsform und unter Bezugnahme auf die Zeichnung beschrieben. Es zeigen:
- Fig. 1: ein erfindungsgemäßes Türmodul in einem Vormontagezustand; und
- Fig. 2: eine Explosionsdarstellung des Türmoduls in Fig. 1 in einem Endmontagezustand.

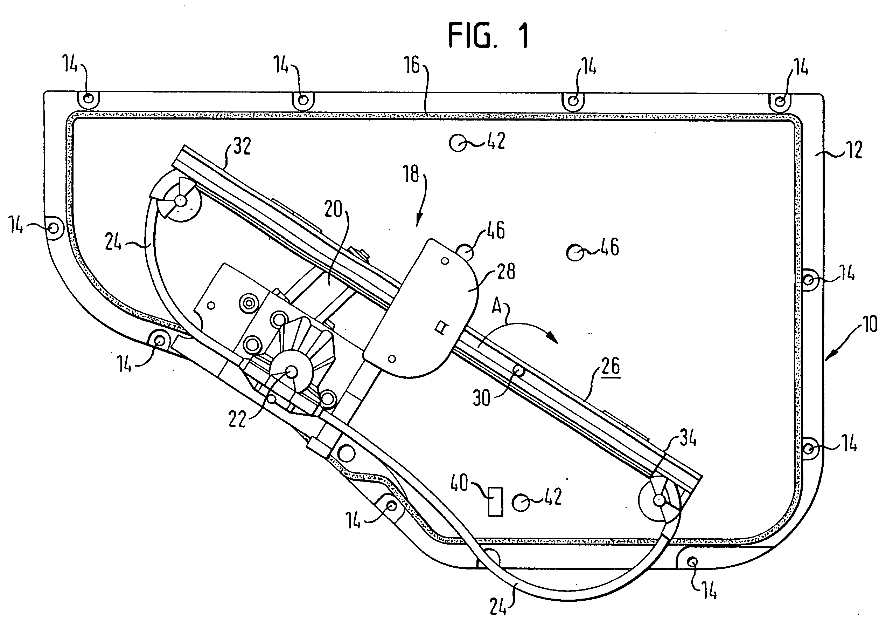

Fig. 1 zeigt ein erfindungsgemäßes Türmodul in einem Vormontagezustand. Das Türmodul umfasst eine Platte 10, die aus einem nicht-transparenten Material, beispielsweise einem Spritzgusskunststoff, gebildet ist. Die Platte 10 ist auf eine Öffnung (nicht gezeigt) eines Türblechs einer Kraftfahrzeugtür - im dargestellten Beispiel einer rechten Kraftfahrzeugtür - aufsetzbar. Dabei ist der Umriss der Platte 10 derart an die Form der Öffnung angepasst, dass die Platte 10 im aufgesetzten Zustand die Öffnung und einen die Öffnung begrenzenden Randbereich des Türblechs der Kraftfahrzeugtür überdeckt.

Entlang eines sich bei aufgesetzter Platte mit dem Randbereich des Türblechs überlappenden Randbereiches 12 der Platte 10 sind Bohrungen 14 vorgesehen, um das Türmodul mit dem Türblech der Kraftfahrzeugtür zu verschrauben. Damit die Platte 10 die Öffnung des Türblechs abdichtend überdeckt, verläuft außerdem entlang des gesamten Randbereiches 12 der Platte 10 ein Dichtstreifen 16 aus einem elastisch verformbaren Material, beispielsweise eine Gummidichtlippe.

Auf der Platte 10 ist eine Fensterhebereinrichtung 18 gehalten. Die Fensterhebereinrichtung 18 umfasst eine Antriebseinheit, die einen Antriebsmotor 20, eine Getriebeeinheit 22 und eine Bowdenzugführung 24 aufweist. In der Bowdenzugführung 24 geführte Bowdenzüge (nicht gezeigt) verbinden den Antriebsmotor 20 über die Getriebeeinheit 22 mit einem in einer Schiene 26 zwangsgeführten Schlitten 28, so dass letzterer durch den Antriebsmotor 20 entlang der Schiene 26 bewegbar ist. Der Schlitten 28 dient zur Befestigung einer Fensterscheibe (nicht gezeigt), um letztere durch den Antriebsmotor 20 bewegen und somit ein Fenster der Kraftfahrzeugtür automatisch öffnen oder schließen zu können.

Im Vormontagezustand ist die Schiene 26 der Fensterhebereinrichtung 18 ungefähr parallel zu einer zwischen zwei gegenüberliegenden Ecken der Platte 10 verlaufenden Diagonalen der Platte 10 orientiert. In dieser Vormontagelage ragt im Wesentlichen kein Teil der Fensterhebereinrichtung 18 über die Platte 10 hervor. Insbesondere ragen keine Abschnitte der Schiene 26 über den Rand der Platte 10. Lediglich die Bowdenzugführung 24 erstreckt sich bereichsweise über die Platte 10 hinaus. Da die Bowdenzugführung 24 aber flexibel ausgebildet ist, lässt sie sich bei einem Transport des Türmoduls gegebenenfalls derart biegen und auf der Platte 10 fixieren, dass auch sie nicht über den Rand der Platte 10 hervorsteht.

Die Fensterhebereinrichtung 18 ist um einen Drehpunkt 30 herum drehbar auf der Platte 10 gelagert. Auf der Platte 10 befindet sich der Drehpunkt 30 in einem Bereich, der einen oberen und einen unteren sowie einen linken und einen rechten Bereich der Platte 10 ungefähr im Verhältnis von 2 : 1 teilt. An der Fensterhebereinrichtung 18 ist der Drehpunkt 30 derart in einem Bereich der Schiene 26 angeordnet, dass die Schiene 26 in einen oberen Abschnitt 32 und einen unteren Abschnitt 34 mit einem Längenverhältnis von ungefähr 2 : 1 geteilt wird. Um die Fensterhebereinrichtung 18 aus ihrer Vormontagelage in ihre Endlage zu verstellen, wird die Fensterhebereinrichtung 18 in Richtung A soweit um den Drehpunkt 30 gedreht, bis die Schiene 26 im Wesentlichen senkrecht zu einer oberen Kante der Platte 10, bevorzugt vertikal, und insbesondere in Verschieberichtung einer Fensterscheibe (nicht gezeigt) orientiert ist.

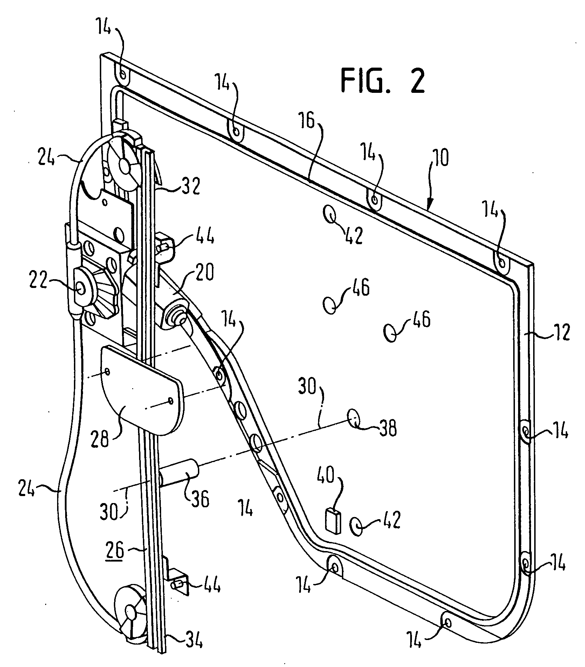

Wie in Fig. 2 dargestellt ist, ist im Bereich des Drehpunktes 30 an der Schiene 26 ein zur Platte 10 weisender Lagerbolzen 36 vorgesehen, der zum Halten der Fensterhebereinrichtung 18 an der Platte 10 in einer dafür vorgesehenen Bohrung 38 der Platte 10 gelagert ist.

Die Bohrung 38 dient zugleich als Zugriffsöffnung und ermöglicht ein Angreifen des Lagerbolzens 36 von der der Fensterhebereinrichtung 18 abgewandten Seite der Platte 10. Auf diese Weise lässt sich die Fensterhebereinrichtung 18 bei aufgesetzter Platte 10 von außerhalb des Türinnenraums aufrichten.

In einem unteren Bereich der Platte 10 ist ein Anschlagvorsprung 40 vorgesehen, an den die Schiene 26 der Fensterhebereinrichtung 18 in ihrer Endlage anschlägt. Im Bereich des Anschlagvorsprungs 40 und in einem oberen Bereich der Platte 10 ist jeweils eine Bohrung 42 vorgesehen, um die Fensterhebereinrichtung 18 mittels an der Schiene 26 vorgesehener Befestigungsorgane 44 in ihrer Endlage an der Platte 10 zu fixieren, beispielsweise zu verschrauben.

Darüber hinaus weist die Platte 10 zwei Zugriffsöffnungen 46 auf, die das Einführen eines Werkzeugs, beispielsweise eines Schraubendrehers, ermöglichen, um die Fensterscheibe mit dem Schlitten 28 zu verbinden, beispielsweise zu verschrauben.

Die Montage eines erfindungsgemäßen Türmoduls wird nachfolgend beschrieben: Nach der Vorbereitung der Platte 10 und der Fensterhebereinrichtung 18 wird letztere mittels des in die Bohrung 38 der Platte 10 eingreifenden Lagerbolzens 36 zunächst in einer Vormontagelage auf der Platte 10 gehalten, wobei die Schiene 26 im Wesentlichen parallel zu einer Diagonalen der Platte 10 orientiert ist, so dass die Fensterhebereinrichtung 18 nicht über die Platte 10 hervorsteht.

Nach einem Transport des Türmoduls zum Ort der Endmontage wird das Türmodul mit der Seite, auf der die Fensterhebereinrichtung 18 angeordnet ist, auf die Öffnung des Türblechs der Kraftfahrzeugtür aufgesetzt, wobei die Öffnung vollständig durch die Platte 10 überdeckt wird. Die Fensterhebereinrichtung 18 weist nunmehr in das Innere der Kraftfahrzeugtür. Durch die Bohrungen 14 hindurch wird die Platte 10 am Türblech befestigt, beispielsweise verschraubt.

Anschließend wird ein geeignetes Werkzeug mit dem in der Zugriffsöffnung 38 gelagerten Lagerbolzen 36 in Eingriff gebracht. Durch eine Drehung des Werkzeuges in Richtung A um den Drehpunkt 30 herum wird die Fensterhebereinrichtung 18 von außen, aus ihrer Vormontagelage in ihre Endlage aufgerichtet, in der die Schiene 26 in Verschieberichtung der Fensterscheibe, d.h. im Wesentlichen vertikal orientiert ist. Im Fall einer - wie im dargestellten Beispiel - nicht-transparenten Platte 10 wird die Fensterhebereinrichtung 18 folglich "blind" aus ihrer Vormontagelage in ihre Endlage aufgerichtet.

In der Endlage hintergreifen die Endabschnitte der Schiene 26 jeweils einen Randbereich des Türblechs, wodurch die Platte 10 zusätzlich an das Türblech geklemmt wird. Um eine exakte Lage der Schiene 26 sicherzustellen, schlägt die Schiene 26 an den Anschlagvorsprung 40 an. Durch die Bohrungen 42 hindurch wird die Fensterhebereinrichtung 18 in ihrer Endlage fixiert.

Durch die Zugriffsöffnungen 46 hindurch erfolgt die Verbindung, beispielsweise die Verschraubung, des Schlittens 28 mit der Fensterscheibe. Abschließend werden die Bohrungen 42 und die Zugriffsöffnungen 38, 46 mit einem Dichtmittel, beispielsweise mit Abdichtgummis oder selbstklebenden Folienabschnitten, verschlossen, um den Fahrgastraum wirksam vor äußeren Einflüssen, insbesondere vor eintretender Feuchtigkeit und Geräuschen zu schützen.

Die Zugriffsöffnungen 38, 46 ermöglichen es, die Platte 10 so zu gestalten, dass sie die Öffnung des Türblechs der Kraftfahrzeugtür vollständig überdeckt, da sowohl die Fensterhebereinrichtung 18 als auch der Schlitten 28 durch die Zugriffsöffnungen 38, 46 von außerhalb des Türinnenraums, d.h. von der der Fensterhebereinrichtung 18 abgewandten Seite der Platte 10, aus der Vormontagelage in die Endlage verstellbar bzw. mit der Fensterscheibe verbindbar sind. Durch eine oder mehrere zusätzliche Zugriffsöffnungen ist gegebenenfalls auch eine auf der zum Türinnenraum weisenden Seite der Platte 10 angeordnete Türverriegelungseinrichtung von außen betätigbar.

### Bezugszeichenliste

- 10: Platte
- 12: Randbereich
- 14: Bohrung
- 16: Dichtstreifen
- 18: Fensterhebereinrichtung
- 20: Antriebsmotor
- 22: Getriebeeinheit
- 24: Bowdenzugführung
- 26: Schiene
- 28: Schlitten
- 30: Drehpunkt
- 32: oberer Abschnitt
- 34: unterer Abschnitt
- 36: Lagerbolzen
- 38: Zugriffsöffnung
- 40: Anschlagvorsprung
- 42: Bohrung
- 44: Befestigungsorgan
- 46: Zugriffsöffnung
- A: Drehrichtung

## Patentansprüche

1. Türmodul mit einer auf eine Öffnung, insbesondere eines Türblechs einer Kraftfahrzeugtür, aufsetzbaren Platte (10), welche die Öffnung im aufgesetzten Zustand zumindest überwiegend überdeckt, wobei auf einer Seite der Platte eine zwischen einer Vormontagelage und einer Endlage verstellbare Fensterhebereinrichtung (18) gehalten ist, und wobei in der Platte (10) zumindest eine Zugriffsöffnung (38, 46) derart vorgesehen ist, dass die Fensterhebereinrichtung (18) bei aufgesetzter Platte (10) von der anderen Seite der Platte (10) durch die Platte (10) hindurch verstellbar ist.

2. Türmodul nach Anspruch 1,
**dadurch gekennzeichnet,**
**dass** die Fensterhebereinrichtung (18) um einen Drehpunkt (30) herum drehbar ist und die Zugriffsöffnung (38) im Bereich des Drehpunktes (30) angeordnet ist.

3. Türmodul nach Anspruch 1 oder 2,
**dadurch gekennzeichnet,**
**dass** die Position einer Schiene (26) der Fensterhebereinrichtung (18) in der Vormontagelage schräg zu ihrer Position in der Endlage orientiert ist.

4. Türmodul nach Anspruch 3,
**dadurch gekennzeichnet,**
**dass** Endabschnitte der Schiene (26) in der Endlage über die Platte (10) hinausragen.

5. Türmodul nach einem der vorherigen Ansprüche,
**dadurch gekennzeichnet,**
**dass** zumindest eine weitere Zugriffsöffnung (46) zum Verbinden der Fensterhebereinrichtung (18) mit einer Fensterscheibe vorgesehen ist.

6. Türmodul nach einem der vorherigen Ansprüche,
**dadurch gekennzeichnet,**
**dass** auf der einen Seite der Platte (10) eine Türverriegelungseinrichtung und zumindest eine im Bereich der Türverriegelungseinrichtung angeordnete Zugriffsöffnung zum Betätigen der Türverriegelungseinrichtung bei aufgesetzter Platte (10) vorgesehen ist.

7. Türmodul nach einem der vorherigen Ansprüche,
**dadurch gekennzeichnet,**
**dass** die oder jede Zugriffsöffnung (38, 46) jeweils eine Fläche im Bereich von wenigen Quadratzentimetern aufweist/aufweisen.

8. Türmodul nach einem der vorherigen Ansprüche,
**dadurch gekennzeichnet,**
**dass** die Platte (10) eine Abdichtplatte ist, welche die Öffnung abdichtend überdeckt.

9. Türmodul nach einem der vorherigen Ansprüche,
**dadurch gekennzeichnet,**
**dass** die Platte (10) nicht transparent ist.

10. Verfahren zum Montieren einer Fensterhebereinrichtung (18) in einem durch ein Türblech begrenzten Türinnenraum einer Kraftfahrzeugtür, bei dem
die Fensterhebereinrichtung (18) in einer Vormontagelage auf einer Platte (10) angebracht wird,
die Platte (10) auf eine im Türblech vorgesehene Öffnung derart aufgesetzt wird, dass die Fensterhebereinrichtung (18) in den Türinnenraum weist,
die Fensterhebereinrichtung (18) von außen durch zumindest eine in der Platte (10) vorgesehene Zugriffsöffnung (38) hindurch in eine Endlage gebracht wird und
die Fensterhebereinrichtung (18) von außen durch die und/oder zumindest eine weitere Zugriffsöffnung (46) hindurch mit zumindest einer Fensterscheibe verbunden wird.

11. Verfahren nach Anspruch 10,
**dadurch gekennzeichnet,**
**dass** die aufgesetzte Platte (10) in der Endlage der Fensterhebereinrichtung (18) durch eine Schiene (26) der Fensterhebereinrichtung (18) am Türblech fixiert und insbesondere an das Türblech geklemmt wird, wobei die Schiene (26) einen die Öffnung begrenzenden Randbereich des Türblechs hintergreift.

12. Verfahren nach Anspruch 10 oder 11,
**dadurch gekennzeichnet,**
**dass** die Öffnung durch die aufgesetzte Platte (10) abdichtend verschlossen wird und die oder jede Zugriffsöffnung (38, 46) der Platte (10) mit einem Dichtmaterial verschlossen wird.
